Europäisches Patentamt

European Patent Office

Office européen des brevets

(19)

(11) **EP 0 784 535 B1**

(12) **EUROPÄISCHE PATENTSCHRIFT**

(45) Veröffentlichungstag und Bekanntmachung des Hinweises auf die Patenterteilung:
**02.06.1999 Patentblatt 1999/22**

(21) Anmeldenummer: 95933302.2

(22) Anmeldetag: **28.09.1995**

(51) Int. Cl.$^6$: **B29C 45/76**

(86) Internationale Anmeldenummer:
**PCT/DE95/01345**

(87) Internationale Veröffentlichungsnummer:
**WO 96/09926 (04.04.1996 Gazette 1996/15)**

(54) **VERFAHREN ZUR BEEINFLUSSUNG VON MASCHINENEINSTELLGRÖSSEN SOWIE VORRICHTUNG ZUR DURCHFÜHRUNG DES VERFAHRENS**

METHOD OF INFLUENCING MACHINE SETTING VALUES AND DEVICE FOR CARRYING OUT THE METHOD

PROCEDE CONCU POUR INFLUER SUR DES VALEURS DE CONSIGNE DE MACHINES, ET DISPOSITIF DE MISE EN OEUVRE DUDIT PROCEDE

(84) Benannte Vertragsstaaten:
**AT CH DE LI**

(30) Priorität: **28.09.1994 DE 4434653**

(43) Veröffentlichungstag der Anmeldung:
**23.07.1997 Patentblatt 1997/30**

(73) Patentinhaber: **Arburg GmbH & Co.
72290 Lossburg (DE)**

(72) Erfinder:
 • **HEHL, Karl
  D-72290 Lossburg (DE)**
 • **GIERTH, Michael, Manfred,Dr.
  D-52062 Aachen (DE)**
 • **WYBITUL, Oliver, Kay
  D-52499 Baesweiler (DE)**

(74) Vertreter: **Reinhardt, Harry et al
Mayer, Frank, Reinhardt,
Schwarzwaldstrasse 1A
75173 Pforzheim (DE)**

(56) Entgegenhaltungen:
EP-A- 0 076 010          EP-A- 0 372 899
DE-A- 3 211 728          DE-A- 4 108 992
US-A- 4 240 996

• PLASTVERARBEITER, Bd. 45, Nr. 9, 1.September 1994 HEIDELBERG, DE, Seiten 40-48, XP 000477125 W. MICHAELI ET AL. 'GEZIELTE SPRITZGIESSMASCHINENEINSTELLUNG DURCH SIMULATIONSERGEBNISSE, TEIL 2'
• PLASTVERARBEITER, Bd. 45, Nr. 8, 1.August 1994 HEIDELBERG, DE, Seiten 30-32, 34, XP 000486423 MICHAELI W ET AL 'GEZIELTE SPRITZGIESS-MACHINENEINSTELLUNG DURCH SIMULATIONSERGEBNISSE, TEIL 1 '
• PATENT ABSTRACTS OF JAPAN vol. 14 no. 361 (M-1006) [4304] ,6.August 1990 & JP,A,02 128822 (TOSHIBA MACH CO LTD) 17.Mai 1990,
• INTERNATIONAL POLYMER SCIENCE AND TECHNOLOGY, Bd. 20, Nr. 5, 1.Januar 1993 SHREWSBURY, SHROPSHIRE, GB, Seiten T12-T19, XP 000393830 MICHAELI W ET AL 'NEW POSSIBILITIES FOR MOULD AND PROCESS OPTIMISATION IN INJECTION MOULDING OF ELASTOMER PARTS'
• KUNSTSTOFFE, Bd. 81, Nr. 10, 1.Oktober 1991 MÜNCHEN, DE, Seiten 965-971, XP 000297625 WORTBERG J ET AL 'SPC UND PROZESSUEBERWACHUNG AM BEISPIEL DES SPRITZGIESSPROZESSES'

- KUNSTSTOFFE, Bd. 81, Nr. 2, 1.Februar 1991 MUNCHEN DE, Seiten 103-108, XP 000287453 SCHWAB E 'RECHNERGESTÜTZTE QUALITÄTSSICHERUNG BEIM SPRITZGIESSEN'
- PLASTVERARBEITER, Bd. 34, Nr. 3, 1.März 1983 SPEYER/RHEIN DE, Seiten 213-218, H. KÄUFER ET AL. 'PRODUKTADAPTIVE SPRITZGIESSMASCHINENSTEUERUNG'

## Beschreibung

Die Erfindung betrifft ein Verfahren zur Beeinflussung von Maschineneinstellgrößen in zyklisch ablaufenden Prozessen nach Anspruch 1 sowie eine Vorrichtung zur Durchführung des Verfahrens nach Anspruch 8.

Das Verfahren kann bevorzugt in der kunststoffverarbeitenden und metallverarbeitenden Industrie eingesetzt werden, beispielsweise in Verbindung mit Kunststoff-Spritzgießmaschinen, Blasformmaschinen, Druckgußmaschinen, Aluminiumdruckgußmaschinen, jedoch auch in Verbindung mit Pressen oder Schweißapparaten, sofern dabei zyklisch ablaufende Prozesse vorgenommen werden.

Ein derartiges Verfahren oder eine derartige Vorrichtung ist bekannt aus R. Vaculik "Modellgestützte Regelung der Formteilqualität beim Spritzgießen" aus 17. IKV-Kolloquium Aachen 1994, Block 6, Seite 151 bis 161, Erscheinungsdatum: verteilt anläßlich des Kolloquiums im Eurogress Aachen vom 02. bis 04. März 1994. Angepaßt an die jeweilige Problemstellung wird dort ein Bemusterungsplan festgelegt, bei dem systematisch Maschineneinstellgrößen beim Einrichten der Maschine variiert werden. Während dieser Bemusterung werden einerseits die Prozeßkurvenverläufe der an der Maschine ermittelbaren Prozeßparameter aufgezeichnet. Die während dieser Bemusterung hergestellten Produkte werden zudem hinsichtlich ihrer charakteristischen Eigenschaften untersucht. Im Anschluß werden die Prozeßkurvenverläufe in einzelne Prozeßphasen zergliedert und innerhalb der einzelnen Prozeßphasen werden nach mathematisch-analytischen Verfahren für einzelne Qualitätsmerkmale Prozeßkennzahlen gebildet. Die Prozeßkennzahlen sind diskrete Zahlenwerte, die den jeweiligen Prozeßkurvenverlauf innerhalb der einzelnen Prozeßphasen charakterisieren (Korrelationskoeffizient, Extrema, Integral, Mittelwerte usw.). Allerdings wird dort nur ein Qualitätsmerkmal, nämlich der Glanz, anhand von zwei untereinander unabhängigen Prozeßparametern geregelt. Es handelt sich damit um eine Ein-Größenregelung. Wie dort bereits ausgeführt, ist bei einer gegenseitigen Abhängigkeit der Prozeßkenngrößen der Entwurf eines Mehrgrößenreglers erforderlich.

Die Auslegung eines echten Mehrgrößenreglers ist ungleich schwieriger, da Entkopplungsglieder zur unabhängigen Einstellung der Prozeßkenngrößen aufgestellt werden müssen.

Die Bildung von Prozeßkennzahlen war auch aus Michael Manfred Gierth, "Methoden und Hilfsmittel zur prozeßnahen Qualitätssicherung beim Spritzgießen von Thermoplasten", Dissertation, 1. Aufl., 1992 bekannt, so daß damit die jeweiligen Prozeßkennzahlen mit dem dazugehörigen Qualitätsmerkmal in mathematisch-statistischer Form korreliert werden konnten. Die damit ermittelte Funktion QM = f (PKZ) (charakteristische Eigenschaft = eine Funktion der Prozeßkennzahlen) erlaubt zwar während der folgenden Produktion eine Vorhersage der charakteristischen Eigenschaften des gefertigten Produkts, so daß in Abhängigkeit davon beispielsweise eine Weiche zum Aussondern von Schlechtteilen gesteuert werden kann, so daß der Zusammenhang einer Prozeßkennzahl mit einer Einstellgröße bekannt war, jedoch nicht der funktionale Zusammenhang zwischen mehreren Prozeßkenngrößen und mehreren Maschineneinstellgrößen. Ähnliches ist aus W. Michaeli, u.a. "Qualitätsüberwachung beim Spritzgießen von Recyclat" in: PLASTVERARBEITER, 1993, Nr. 10, Seiten 96-102 bekannt.

Aus der DE-A 35 05 554 ist ein Verfahren zur Untersuchung von Druckverläufen bekannt, um selbsttätig Änderungen im Druckverlauf festzustellen, die bei Überschreiten bestimmter Schwellwerte ein Signal für eine Veränderung der Umschaltzeitpunkte z.B. zwischen Einspritzphase und Nachdruckphase für den folgenden Zyklus geben. Eine Verbindung zu den charakteristischen Eigenschaften des fertigen Produkts wird jedoch nicht hergestellt. Da nur eine Stellgröße benutzt wird, können nicht beliebige Qualitätsmerkmale zielgerichtet beeinflußt werden.

Zur Beschleunigung der Einrichtung einer Maschine, auf der zyklische Prozesse ablaufen, werden in der DE-A 40 02 398 verschiedene Temperaturen im Bereich der Maschine mit einer Temperatur eines hergestellten Teils in Beziehung gesetzt, wobei die Temperatur des Teils wiederum mit bestimmten Eigenschaften des Teils in Verbindung steht. Wenngleich dadurch das Einrichten der Maschine beschleunigt werden kann, ist immer noch der Einsatz eines Expertenwissens erforderlich, damit tatsächlich die Temperatur des Teils bestimmten charakteristischen Eigenschaften entspricht. Somit werden keine analytischen Zusammenhänge von Prozeßgrößen und Qualitätsmerkmalen hergestellt.

Aus der DE-A 35 38 516 ist ferner ein Gewichtsregler bekannt, bei dem das nach dem Spritzgußprozeß ermittelte Istgewicht von Spritzgießteilen verglichen mit einem Sollgewicht als Regelgröße für den Nachdruck in der Nachdruckphase der Spritzgießmaschine gewählt wird. Hier wird lediglich eine charakteristische Eigenschaft geregelt.

Aus der EP-B 455 820 ist ferner ein Verfahren bekannt, bei dem aufgrund eines abgespeicherten Expertenwissens beim Auftreten von Fehlteilen Gegenmaßnahmen in die Wege geleitet werden. Bei den Gegenmaßnahmen handelt es sich allerdings um die abgespeicherten empirischen Erfahrungen eines Experten, so daß eine teilspezifische Veränderung in Abhängigkeit der tatsächlich auftretenden Bedingungen nicht möglich ist. Eine Regelung der charakteristischen Eigenschaften ist nicht möglich.

In W. Michaeli, u.a. "Qualitätsgesichertes Spritzgießen" in Kunststoffe 82(1992) 12, S. 1167-1171 wird eine Regelung des Qualitätsmerkmals "Glanz" auf der Grundlage Glanz = f(Einspritzgeschwindigkeit, Wandtemperatur) beschrieben. Hier wird nur eine Zielgröße / ein Qualitätsmerkmal in Abhängigkeit von zwei Prozeßkennzahlen geregelt. Ein Qualitätsvektor kann nicht in Abhängigkeit einer Kennzahlenmatrix beschrieben oder geregelt werden, da die gleichzeitige Regelung mehrerer Qualitätsmerkmale eine Lösung des Problems der linearen Abhängigkeit einzelner Qualitätsmerkmale untereinander erfordert. Die Regelung selbst ist nicht beschrieben.

In der DE-A 35 45 360 wird eine an der Spritzdüse ermittelte Druck-Zeit-Kennlinie als für die Qualität maßgebend bestimmt, so daß bei einem Verlassen dieser Kennlinie beurteilt werden kann, daß jetzt ein Schlechtteil entsteht. Auf die komplexen Zusammenhänge zwischen verschiedenen Maschineneinstellgrößen wird nicht eingegangen.

Nach der DE-A 40 25 221 wird durch Simmulationsmethoden ein optimaler Arbeitspunkt iterativ bestimmt. Auf die Zusammenhänge zwischen Maschineneinstellgrößen, Prozeßkennzahlen und charakteristischen Eigenschaften wird nicht eingegangen, stattdessen wird ein Expertensystem zur Verfügung gestellt, das üblicherweise eine Optimierung des Arbeitspunktes durchführt, wie sie von einem erfahrenen Einsteller empirisch vorgenommen würde.

In der EP-A 457 230 werden Prozeßparameter für einzelne Zyklusabschnitte bestimmt. Eine Korrelation zwischen den einzelnen Parametern wird jedoch nicht vorgenommen.

In der US-A 5,246,644 wird zunächst ein Arbeitsraum zweidimensional mit den Parametern Druck und Temperatur abgefahren. Mit den ermittelten Ergebnissen wird aufgrund einer Verlustgewichtung ermittelt, welcher Faktor maßgeblich die Qualität beeinflußt und man versucht dann, diesen einen Faktor zu optimieren. Auf die komplexen Zusammenhänge zwischen verschiedenen Maschineneinstellgrößen wird nicht eingegangen.

In der US-A 5,225,122 erfolgt eine Nachführung des Arbeitspunktes innerhalb eines vorgegebenen Expertenwissens. Eine selbständige Qualitätsoptimierung unter Berücksichtigung der komplexen Zusammenhänge erfolgt hierbei nicht.

Allen vorausgegangenen Verfahren ist gemeinsam, daß keine Regelung in Abhängigkeit beliebiger vorgegebener charakteristischer Eigenschaften des Teiles möglich ist. Sofern eine Regelung erfolgt, so werden nur einzelne Prozeßgrößen oder Eigenschaften unabhängig von anderen Werten geregelt, ohne Rücksicht auf die komplexen Zusammenhänge zwischen einzelnen Verfahrensparametern und Eigenschaften der gefertigten Teile.

Ausgehend von diesem Stand der Technik liegt der vorliegenden Erfindung die Aufgabe zugrunde, ein Verfahren und eine Vorrichtung zu schaffen, die mittels einer Signalanalyse trotz der komplexen Zusammenhänge zwischen einzelnen Verfahrensparametern die Bestimmung einer Beziehung zwischen Maschineneinstellgrößen und Qualitätsmerkmalen ermöglicht, um die Qualität der herzustellenden Teile zu steigern und eine Anwendung hierfür in der Serienproduktion zu schaffen.

Diese Aufgabe wird durch ein Verfahren mit den Merkmalen des Anspruches 1 und eine Vorrichtung mit den Merkmalen des Anspruches 8 gelöst.

Gegenüber den bekannten Verfahren wird nicht nur eine kontinuierliche Überwachung der herzustellenden Teile, sondern auch eine kontinuierliche Regelung zur Erzielung einer optimalen Qualität geschaffen. Die Beziehung zwischen Qualität und Maschineneinstellung erlaubt bereits während des Prozesses, also während des einzelnen Zyklus nicht nur die Eigenschaft des Teils zu beurteilen, vielmehr können Gegenmaßnahmen zur Erzielung einer optimalen Teilequalität bereits während dieses Zyklus in die Wege geleitet werden. Ist ein direkter zyklussynchroner Eingriff aufgrund verfahrens- oder anlagentechnischer Bedingungen nicht möglich, erfolgt die Gegenmaßnahme erst in dem oder den folgenden Produktionszyklen. Während dieser Zeit hergestellte Teile können selbsttätig ausgesondert werden. Die Vorrichtung kann dabei selbst aufgrund der ermittelten Korrelation zwischen charakteristischer Eigenschaft und Prozeßkurvenverlauf ermitteln, welche Maschineneinstellgröße(n) verändert werden müssen, um die gerade jetzt gewünschte Qualität zu erzielen.

Nach Anspruch 7 ermittelt die Vorrichtung selbst die Prozeßphasen durch Betrachtung sämtlicher während der Produktion als auch während der Testphase ermittelten Signale und bestimmt in Abhängigkeit davon für einzelne Prozeßphasen Kennzahlen, die für diesen Prozeß kennzeichnend sind. Diese Kennzahlen werden in Korrelation mit den charakteristischen Eigenschaften gesetzt und ergeben bestimmte Beziehungen zwischen einer Mehrzahl von charakteristischen Eigenschaften und einer Mehrzahl von Prozeßparametern. In der Regelung selbst wird beim Auftreten eines Differenzwertes in wenigstens einer charakteristischen Eigenschaft anhand der Prozeßkennzahl(en) die Maschineneinstellgröße ausgewählt, die am nachhaltigsten Einfluß zur Verringerung des Differenzwertes hat, ohne dabei einen negativen Einfluß auf andere Verfahrensparameter auszuüben.

Weitere Vorteile ergeben sich aus den Unteransprüchen.

KURZBESCHREIBUNG DER ZEICHNUNGEN

Fig. 1 Ein Blockdiagramm mit der teilweisen Darstellung einer Spritzgießmaschine, an der das erfindungsgemäße Verfahren ausgeführt wird,

Fig. 2 ein Flußdiagramm, das den durchgeführten Verfahrensablauf verdeutlicht.

Fig. 3, 4 Blockdiagramme zur Beschreibung der Regelung,

Fig. 5, 6 Prozeßkurvenverläufe.

Das Verfahren und die Vorrichtung wird im folgenden anhand einer Spritzgießmaschine, vorzugsweise einer Spritzgießmaschine zur Verarbeitung von plastischen Massen, wie Kunststoffen oder Pulvermassen erläutert. Das Verfahren läßt sich jedoch wie eingangs bereits erläutert auch problemlos in anderen Bereichen einsetzen, in denen zyklisch ablaufende Prozesse zur Herstellung (Urformung) oder Bearbeitung (Umformung) von Produkten eingesetzt werden.

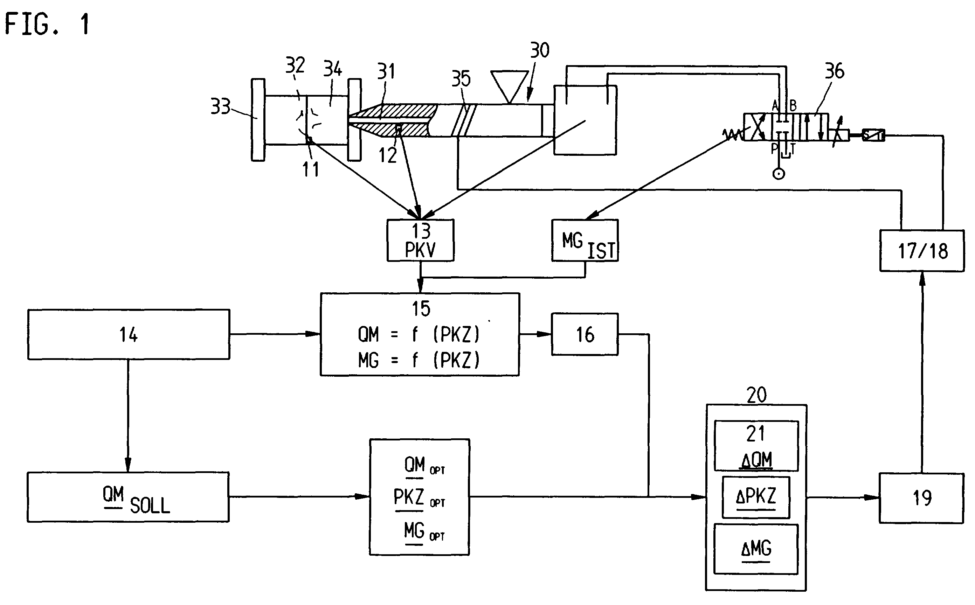

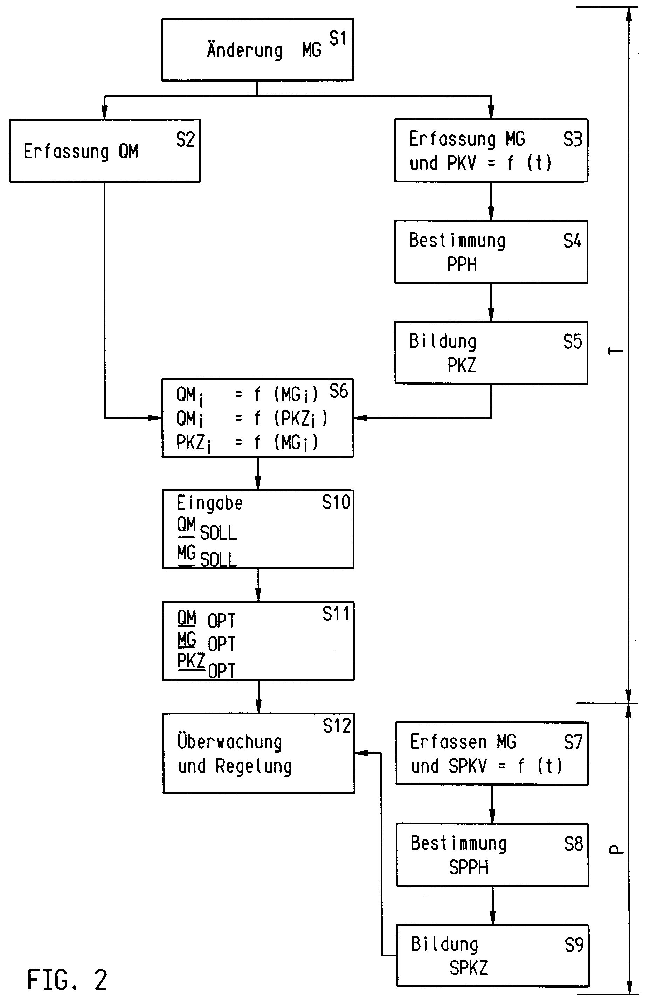

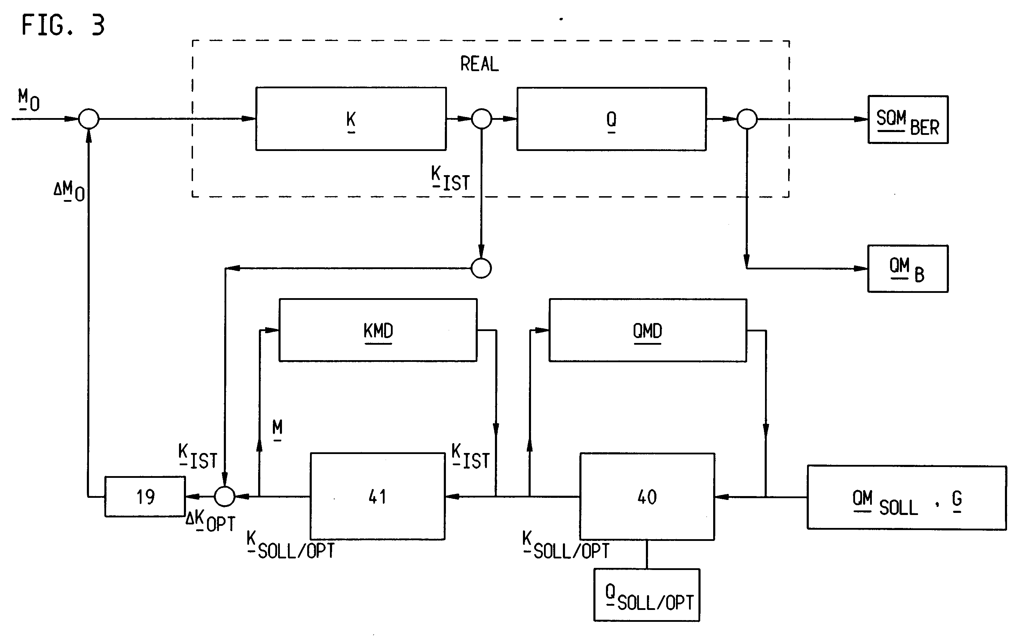

Das Verfahren gliedert sich grundsätzlich gemäß Fig. 2 in eine Testphase T, eine Produktionsphase P sowie einen Regelkreis R (Fig. 1,3). Bevorzugterweise wird auch zu Beginn der Testphase an der Maschine ein Arbeitspunkt eingestellt. Unter einem Arbeitspunkt versteht man dabei eine Einstellung der Maschineneinstellgrößen, die überhaupt erst die Herstellung von Produkten zumindest in einer halbwegs vernünftigen Art und Weise erlaubt. In der Testphase wird dann, wie auch in dem Aufsatz "Qualitätsüberwachung beim Spritzgießen von Recyclat" beschrieben, eine Bemusterung durchgeführt, die ggf. auch systematisch nach einem Bemusterungsplan durchgeführt werden kann. Dabei werden z.B. neun bis zehn verschiedene Maschineneinstellungen vorgenommen, bei denen die wesentlichen Maschineneinstellgrößen MG variiert werden (Schritt S1). Bei jeder Maschineneinstellung werden Formteile entnommen und mittels konventioneller Methoden, auf die hier nicht näher einzugehen ist, zur Bestimmung ihrer charakteristischen Eigenschaften untersucht (Schritt S2). Die Bemusterung kann jedoch auch während der Produktion durch Betrachtung einzelner gefertigter Teile erfolgen. Charakteristische Eigenschaften sind beliebige, attributive (z.B. Brenner) oder variable (z.B. Maße, Gewicht) Eigenschaften. Zudem werden während dieser Prozesse mit den in der Maschine vorhandenen Sensormitteln 11,12 sowohl die Maschineneinstellgrößen als auch Prozeßparameter wie z.B. Werkzeuginnendruck, Werkzeugtemperatur, Temperatur des Verarbeitungsmaterials, Einspritzgeschwindigkeit und dergleichen kontinuierlich erfaßt und als Prozeßkurvenverläufe vorzugsweise über die Zykluszeit oder z.B. den Schneckenweg gespeichert (Schritt S3). Unter Prozeßkurvenverläufen sind dabei nicht nur die unmittelbar sich ergebenden Kurvenverläufe wie z.B. Druck-Zeit-, Druck-Weg- oder Temperatur-Zeitverläufe zu verstehen, sondern auch die daraus berechenbaren Prozeßkurvenverläufe wie z.B. Ableitungen, Integrale und dergleichen. Diese Prozeßkurvenverläufe sind eine Funktion der Maschineneinstellgrößen, jedoch läßt sich hieraus noch kein Rückschluß bilden, welche Maschineneinstellgröße verändert werden muß, um den Prozeßkurvenverlauf in eine bestimmte Richtung zu verändern, geschweige denn ist es möglich, Voraussagen zu treffen, welche Maschineneinstellgröße geändert werden muß, um eine bestimmte charakteristische Eigenschaft QM zu erzielen.

Aus diesem Grund werden die in Schritt S3 erfaßten Prozeßkurvenverläufe PKV in sich in Abhängigkeit der jeweiligen Prozeßkurvenverläufe ergebende, variable Prozeßphasen PPH zergliedert, so daß sie abschnittsweise beschrieben werden können (Schritt S4). Dabei kann es jedoch für manche Prozeßkurvenverläufe wie z.B. Temperaturverläufe auch nicht nötig sein, diese in Prozeßphasen zu zergliedern, da sie z.B. weitgehend linear sind. Hier wird dann der gesamte Prozeßkurvenverlauf als eine Prozeßphase angesehen. Das Beschreiben dieser Prozeßphasen erfolgt durch Prozeßkennzahlen PKZ, die aufgrund bekannter Varianz- und Regressionsanalysen, neuronaler Netze oder ähnlicher Analysen ermittelt sind (Schritt S5). Die Beschreibung und Bestimmung der Charakteristiska der Prozeßkurvenverläufe PKV innerhalb einzelner Prozeßphasen PPH erfolgt durch diskrete Einzelwerte (Prozeßkennzahlen PKZ), die im wesentlichen nach den Regeln der Differentialrechnung gebildet werden (absolute und lokale Extrema, Wendepunkte, Integrale, Mittelwerte, ...).

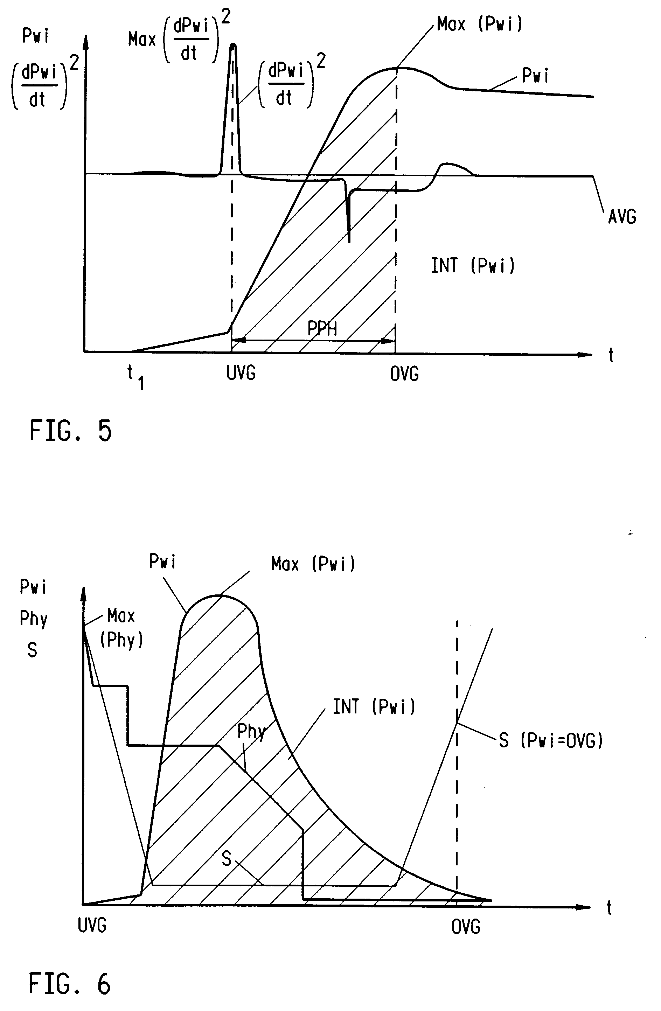

Die Bildung dieser Prozeßkennzahlen PKZ wird im folgenden anhand der Figuren 5 und 6 näher erläutert. In den Figuren 5 und 6 sind verschiedene Prozeßkurvenverläufe dargestellt. In Figur 5 ist hierzu zunächst der Werkzeuginnendruck Pwi über die Zeit aufgetragen. Während der Füllphase erhält der Werkzeuginnendrucksensor zum Zeitpunkt t1 ein erstes Drucksignal, das dann allmählich ansteigt, bis im Bereich der unteren Verarbeitungsgrenze UVG das Werkzeug gefüllt ist. In der anschließenden Kompressionsphase steigt der Druck dann kontinuierlich an, bis an der oberen Verarbeitungsgrenze OVG dann das Maximum des Werkzeuginnendrucks Max(Pwi) erreicht ist. In der anschließenden Nachdruckphase sinkt der Werkzeuginnendruck dann allmählich ab, wobei sich ein unterschiedlicher Abfall ergeben kann, wie ein Vergleich der Figuren 5 und 6 deutlich macht.

In Figur 5 ist ergänzend ein weiterer Prozeßkurvenverlauf PKV aufgezeichnet, der im vorliegenden Fall durch zweifache Ableitung der Werkzeuginnendruckkurve nach der Zeit ermittelt wurde. Diese Kurve weist an den Unstetigkeitsstellen der Innendruckkurve Maxima auf. Werden diese Kurven nun in einzelne Prozeßphasen PPH zerlegt, so ist die Maschine nunmehr selbst in der Lage, sich hier ihre Bereichsgrenzen für sinnvolle Prozeßphasen zu suchen. Dabei kann durchaus eine Korrelation verschiedener Kurven dahingehend stattfinden, daß z.B. wie im vorliegenden Fall die Prozeßphase mit ihrer unteren Verarbeitungsgrenze UVG dort beginnt, wo die zweite Ableitung $(dPwi/dt)^2$ ihr Maximum hat und dort endet, wo die Werkzeuginnendruckkurve ihr Maximum Max(Pwi) aufweist. Aufgrund verschiedener Extrema, Wendepunkte, Integrale und Mittelwerte lassen sich so verschiedenste Prozeßphasen PPH ermitteln. In Figur 5 könnten z.B. die folgenden Kennzahlen ermittelt werden:

Mittelwert AVG$(dPwi/dt)^2$
Maxima Max$(dPwi/dt)^2$
Integral INT(Pwi) des Werkzeuginnendrucks.

Ähnliches kann in Figur 6 vorgenommen werden. Dort ist ebenfalls der Werkzeuginnendruck Pwi über die Zeit t aufgetragen. Ergänzend sind aufgetragen der Hydraulikdruck Phy und der Schneckenweg s jeweils während eines Spritzzyklus. Untere Verarbeitungsgrenze UVG und obere Verarbeitungsgrenze OVG sind hierbei Anfang und Ende des Spritzzyklus. Auch hier lassen sich verschiedene Prozeßkennzahlen PKZ in diesem Bereich ermitteln, wie z.B.:

Maxima Max(Phy) des Hydraulikdruckes
Maxima Max(Pwi) des Werkzeuginnendruckes
Integral INT(Pwi) des Werkzeuginnendruckes
Schneckenweg s(Pwi=OVG ), bei dem der Werkzeuginnendruck die obere Verarbeitungsgrenze schneidet.

Die so ermittelten Kennzahlen sind grundsätzlich geeignet, die verschiedenen Prozeßkurven zu beschreiben. Zu diesem Zweck wird zunächst allgemein ein Kennzahlenvektor gebildet zu:

$$\begin{bmatrix} PKZ_1 \\ PKZ_2 \\ PKZ_3 \\ PKZ_4 \\ PKZ_5 \\ \cdot \\ \cdot \\ PKZ_n \end{bmatrix} \qquad \begin{bmatrix} MIN(s) \\ AVG\ (ds/dt) \\ MAX\ (Phy) \\ MAX\ (Pwi) \\ INT\ (Pwi) \\ INT\ (Phy) \\ t\ (Pwi = UVG) \\ s\ (Pwi = OVG) \end{bmatrix}$$

mit:

$$
\begin{aligned}
MIN\ (s) &= \quad \text{Minimum-Schneckenweg} \\
AVG\ (ds/dt) &= \quad \text{Mittelwert der ersten Ableitung des} \\
& \quad\quad \text{Schneckenweges nach der Zeit} \\
MAX\ (Phy) &= \quad \text{Maximum des Hydraulikdrucks} \\
MAX\ (Pwi) &= \quad \text{Maximum des Werkzeuginnendrucks} \\
INT\ (Pwi) &= \quad \text{Integral des Werkzeuginnendrucks} \\
INT\ (Phy) &= \quad \text{Integral des Hydrualikdrucks} \\
t\ (Pwi = UVG) &= \quad \text{Zeit, zu der der Werkzeuginnendruck an der unteren} \\
& \quad\quad \text{Verarbeitungsgrenze ist,} \\
s\ (Pwi = OVG) &= \quad \text{Schneckenweg, bei dem der Werkzeugdruck an der} \\
& \quad\quad \text{oberen Verarbeitungsgrenze ist.}
\end{aligned}
$$

Mit diesem Kennzahlenvektor wird dann ein Prozeßmodellvektor ermittelt. Dieser Prozeßmodellvektor stellt sich im einfachsten Fall als eine Geradengleichung folgendermaßen dar, die nun einen Zusammenhang zwischen charakteristischer Eigenschaft QM und Prozeßkennzahl erlaubt. Im einfachsten Fall ergibt sich dies dann z.B. zu folgendem Prozeßmodellvektor

Beispiel 1: Kennzahlvektor

$$
\text{Allgemein:} \qquad \text{Beispiel:}
$$

$$
\begin{bmatrix} PKZ_1 \\ PKZ_2 \\ PKZ_3 \\ PKZ_4 \\ PKZ_5 \\ \cdot \\ \cdot \\ PKZ_n \end{bmatrix}
\qquad
\begin{bmatrix} MIN(s) \\ AVG(ds/dt) \\ MAX(Phy) \\ MAX(Pwi) \\ INT(Pwi) \\ INT(Phy) \\ t(pwi=UVG) \\ s(pwi=OVG) \end{bmatrix}
$$

Beispiel 2: Prozeßmodellvektor

$$
\text{Allgemein:}
$$

$$
\begin{bmatrix} QM_1 \\ QM_2 \\ QM_3 \\ QM_4 \\ QM_5 \\ \cdot \\ QMn \end{bmatrix}
=
\begin{bmatrix} b01 \\ b02 \\ b03 \\ b04 \\ b05 \\ \cdot \\ b0n \end{bmatrix}
+
\begin{bmatrix} b1 \\ b2 \\ b3 \\ b4 \\ b5 \\ \cdot \\ bn \end{bmatrix}
\cdot
\begin{bmatrix} PKZ_1 \\ PKZ_2 \\ PKZ_3 \\ PKZ_4 \\ PKZ_5 \\ \cdot \\ PKZ_n \end{bmatrix}
$$

Die Prozeßkennzahlen sind nun mit einzelnen charakteristischen Eigenschaften ($QM_i$ = f($PKZ_i$)) und mit Maschineneinstellgrößen ($PKZ_i$ = f($MG_i$)) in Beziehung gesetzt (Schritt S6), so daß eine Beziehung zwischen charakteristischer/n Eigenschaft(en) und Maschineneinstellgröße(n) ($QM_i$ = f($MG_i$)) entsteht. Diese Beziehungen können dann in einer Speichereinheit 16 gespeichert werden. Weder diese Beziehungen, noch die ermittelten Prozeßkennzahlen müssen in einem dauerhaften Speicher abgespeichert werden. Die Prozeßkennzahlen bzw. die zu ihrer Erstellung erforderlichen Prozeßkurvenverläufe können zwar bedarfsweise abgespeichert werden, wesentlich ist jedoch lediglich das Vorliegen der ermittelten Beziehung zwischen Maschineneinstellgrößen MG und Prozeßkennzahlen PKZ sowie zwischen Prozeßkennzahlen PKZ und charakteristischen Eigenschaften QM. Werden jedoch die Prozeßkennzahlen PKZ abgespeichert, so kann zu einem späteren Zeitpunkt problemlos auch eine Überprüfung während der Produktion dahingehend stattfinden, ob die ermittelten Beziehungen noch anwendbar sind. Durch Änderungen am Werkzeug oder an der Spritzgießmaschine schon allein durch Verschleiß ist es nämlich durchaus möglich, daß sich die ermittelten Beziehungen im Lauf der Zeit ändern. Damit ist die Testphase T abgeschlossen. Sind diese Beziehungen bekannt, kann die Testphase entfallen, und die Beziehungen werden unmittelbar vorgegeben.

Die Ergebnisse der Testphase erlauben nun zunächst eine Grundeinstellung der Maschineneinstellgrößen MG. In der laufenden Serienproduktion erfolgt zunächst eine den Schritten S3,S4,S5 entsprechende Auswertung, d.h., es werden ebenfalls Serienprozeßkurvenverläufe SPKV kontinuierlich und gegebenenfalls zyklussynchron erfaßt (Schritt S7). Diese Serienprozeßkurvenverläufe werden zyklussynchron in Serienprozeßphasen SPPH zergliedert (Schritt S8) und es werden daraus für die Produktion Serienprozeßkennzahlen SPKZ ermittelt, die die Serienprozeßkurvenverläufe kennzeichnen und mit bestimmten charakteristischen Eigenschaften SQM in Beziehung stehen (Schritt S9). Die Ermittlung dieser bestimmten charakteristischen Eigenschaften SQM kann on-line z.B. durch Berechnung erfolgen, sie können aber auch off-line auf analogem Wege, wenn auch kostenaufwendig ermittelt werden. Hieraus lassen sich in bekannter Weise die sich tatsächlich ergebenden charakteristischne Eigenschaften zyklussynchron ermitteln.

An dieser Stelle wird nun der Regelkreis eingesetzt. Für bestimmte Teile sind nämlich stets mehrere voneinander abhängige bestimmte charakteristische Eigenschaften wie z.B. Maßgenauigkeit,Gewicht oder bestimmte Maschineneinstellgrößen gewünscht, die hier als vorgegebene charakteristische Eigenschaft $\overrightarrow{QM}_{Soll}$ oder $\overrightarrow{MG}_{Soll}$ vorgegeben werden (Schritt S10), oder die Zykluszeit soll verkürzt werden, ein kostengünstiger Zyklus gefahren werden oder unter Verwendung eines hohen Recyclatanteils soll ein qualitativ hochwertiges Produkt erzeugt werden. In Schritt S12 wird nun in einem Vergleicher 21 ein Differenzwert $\Delta\overrightarrow{QM}$ zwischen der aufgrund der in Schritt S9 ermittelten Prozeßkennzahl $\overrightarrow{SPKZ}$ berechneten charakteristischen Eigenschaft $\overrightarrow{SQM}_{ber}$ und der vorgegebenen charakteristischen Eigenschaft $\overrightarrow{QM}_{Soll}$ errechnet. Darüber hinaus läßt sich aufgrund der in Schritt S6 bestimmten Funktion

$$QM_i = f\,(PKZ)_i \text{ oder } \overrightarrow{QM} = b \cdot \overrightarrow{PKZ}$$

feststellen, welche Prozeßkennzahl $PKZ_i$ den größten Einfluß auf den Differenzwert $\Delta\overrightarrow{QM}$ besitzt, wobei eine Bewertung dahingehend stattfindet, daß bei Erzielung der Verringerung des Differenzwertes nicht zugleich andere charakteristische Eigenschaften QM beeinträchtigt werden (Schritt S12). Ausgewählt wird somit die Teilmenge aller gebildeten Prozeßkennzahlen PKZ und aller Maschineneinstellgrößen, die die jeweiligen Qualitätsmerkmale signifikant beeinflussen.

Da einzelne charakteristische Eigenschaften $QM_i$ nicht immer linear unabhängig voneinander sind, können nicht immer Maschineneinstellgrößen geändert werden, ohne zugleich andere charakteristische Eigenschaft(en) zu beeinflussen. Ohnehin können auch die Maschineneinstellgrößen linear abhängig voneinander sein, so daß sich auch hier keine eindeutige Lösung ergibt. In diesem Fall wird vor einer Änderung überprüft, ob alle charakteristischen Eigenschaften $QM_i$ innerhalb vorgegebener Spezifikationen oder Bandbreiten liegen. Hierzu wurden vorab in Schritt S11 entsprechende Werte für optimale charakteristischen Eigenschaften $QM_{opt}$, optimale Maschineneinstellgrößen $MG_{opt}$ und optimale Prozeßkennzahlen $PKZ_{opt}$ eingegeben oder ermittelt. Mittels einer Optimierrechnung wird ein neuer Arbeitspunkt errechnet, der einer bestimmten Einstellung der Maschineneinstellgrößen entspricht, und die dazu notwendige Änderung der Maschineneinstellgrößen an die Maschine übertragen. Steht aber die Prozeßkennzahl fest, kann daraus auf die maßgebliche(n) Maschinen-einstellgröße(n) MG geschlossen werden, die Stellgrößen für die Regelung von $\Delta$QM und/oder $\Delta$PKZ sind. Geregelt wird daher meist der Prozeßkennzahlenvektor, da der unmittelbare Zusammenhang zwischen Maschineneinstellgrößen MG und charakteristischen Eigenschaften SQM der gefertigten Teile fehlt, der Zusammenhang zwischen dem Qualitätsvektor bzw. dem Maschineneinstellgrößenvektor und dem Prozeßkennzahlenvektor jedoch bekannt ist.

Dieser gesamte Ablauf kann während des Prozesses zyklussynchron erfolgen. Es handelt sich bei dem Regler 19 um einen Mehrgrößenregler, der als Regelgrößen beliebige charakteristische Eigenschaften haben kann. Stellgrößen sind beliebige Maschineneinstellgrößen MG. Darüber hinaus liegen die Stellgrößen nicht von Anbeginn fest, sondern ergeben sich während der Produktion infolge der Auswertung der während der Bemusterung ermittelten Beziehung. Somit wird die Regelstrecke erst während der Produktion festgelegt, wobei aufgrund unterschiedlichster Anforderungen an das Produkt in der Regel mehrere Stellgrößen auftreten.

Wenngleich die Ausschußrate durch diese Qualitätsregelung erheblich verringert wird, so ist doch eine Überwachung der charakteristischen Eigenschaften SQM während der Serienproduktion synchron während des Prozesses aufgrund der ermittelten Beziehung dahingehend möglich, daß Schlechtteile durch entsprechendes Signal ausgesondert werden können. In Versuchen hat sich auch gezeigt, daß das Zergliedern der Prozeßkurvenverläufe sowohl in der Testphase als auch in der Produktionsphase am geeignetsten numerisch erfolgt, indem eine Signalanalyse durchgeführt wird. Anhand der vorhandenen Analogsignale für die ständige Erfassung der Verfahrensparameter und anhand der Digitalsignale, die für das Ein- und Ausschalten bestimmter Teile der Maschine gegeben werden, lassen sich verfahrensspezifisch verschiedene Prozeßphasen definieren und für jeden Produktionszyklus berechnen. Innerhalb dieser Prozeßphasen werden dann die Prozeßkennzahlen definiert und ebenfalls berechnet, die wie bereits oben ausgeführt eine Korrelation zu den charakteristischen Eigenschaften QM erlauben.

Alternativ ist es auch möglich, anstatt einer zyklussynchronen oder nahezu zyklussynchronen Berechnung der Qualität zu Beginn aufgrund der ermittelten Beziehung zwischen Maschineneinstellgröße MG und Prozeßkennzahl PKZ und der Beziehung zwischen Prozeßkennzahl PKZ und charakteristischer Eigenschaft QM einen optimalen Arbeitspunkt für die Maschine festzulegen und die Maschine anschließend ständig auf diesen Arbeitspunkt hin zu regeln, ohne nochmals eine Überprüfung in die eine oder andere Richtung vorzunehmen.

Als wesentliche Prozeßkennzahlen, die mit der meist vorhandenen Sensorik der Maschine ermittelbar sind, haben sich die aus den folgenden Prozeßkurvenverläufen ermittelten herausgestellt, die zunächst einen Prozeßkennzahlen-Vektor darstellen, der anschließend dann wie oben bereits erläutert ausgewertet werden muß:

- Maximale und/oder mittlere Druckanstiegsgeschwindigkeit im Werkzeug während der Einspritzphase,
- maximale und/oder mittlere Druckanstiegsgeschwindigkeit im Werkzeug während der Kompressionsphase,
- maximale und/oder mittlere Druckabfallgeschwindigkeit im Werkzeug während der Nachdruckphase,
- Werkzeuginnendruckintegral in der Nachdruckphase,
- Maximum des Werkzeuginnendrucks in der Nachdruckphase,
- mittlere Wandtemperatur in der Bildungsphase,
- mittlere Massetemperatur in der Bildungsphase.

Zur Verdeutlichung der einzelnen Phasen sei an dieser Stelle zunächst beispielhaft ein Zyklus während der Formteilherstellung auf einer Spritzgießmaschine beschrieben. Bei einem derartigen Zyklus wird kontinuierlich der Spritzgießeinheit 30 einer Spritzgießmaschine Material zugeführt, das über Einspritzmittel 31 während einer Einspritzphase zunächst in einen Formhohlraum 32 eingespritzt wird. Gegen Ende des Einspritzens, wenn der Formhohlraum nahezu gefüllt ist, wird der Formhohlraum zunächst noch weiter durch Axialbewegung des Einspritzmittels während einer Kompressionsphase unter Druck gesetzt. Ab einem gewissen Punkt ist dann eine weitere Bewegung des Einspritzmittels 31 nicht mehr möglich und üblicherweise schaltet die Steuerung der Spritzgießmaschine dann auf eine Druckregelung um, die den Nachdruck während einer Nachdruckphase regelt, die für den Erhalt formbeständiger Spritzteile erforderlich ist. In dieser Zeit erstarrt das Spritzgießteil und bildet sich anschließend während der Bildungsphase zum fertigen Formteil.

Die Prozeßkennzahlen PKZ, SPKZ des obigen Prozeßkennzahlen-Vektors werden innerhalb folgender Prozeßbereiche gebildet:

Einspritzphase:

Start durch Maschinen-Digitalsignal: "Start Einspritzen"
Ende durch Maschinen-Digital signal: "Umschalten auf Nachdruck"

oder:

Start durch Schwellwert-Analogsignal "Werkzeuginnendruck auf z.B. 5 bar"
Ende durch errechnetes Signal: "Maximum Beschleunigung Werkzeuginnendruck"

Kompressionsphase:

Start durch Maschinen-Digitalsignal: "Umschalten auf Nachdruck"
Ende durch errechnetes Signal: "Minimum Beschleunigung Werkzeuginnendruck"

oder:

Start durch errechnetes Signal: "Maximum Beschleunigung Werkzeuginnendruck"
Ende durch errechnetes Signal: "Minimum Beschleunigung Werkzeuginnendruck"

Nachdruckphase:

Start durch Maschinen-Digitalsignal: "Umschalten auf Nachdruck"
Ende durch Maschinen-Digitalsignal: "Ende Nachdruck"

oder:

Start durch errechnetes Signal: "Minimum Beschleunigung Werkzeuginnendruck"
Ende durch Maschinen-Digitalsignal: "Ende Nachdruck"

Bildungsphase:

Start durch Maschinen-Digitalsignal: "Start Einspritzen"
Ende durch Maschinen-Digitalsignal: "Ende Nachdruck"

In Figur 1 ist eine Vorrichtung dargestellt, die zur Durchführung des Verfahrens geeignet ist. Darin ist eine Spritzgießeinheit 30 dargestellt, die über ein Einspritzmittel 31 wie z.B. eine Förderschnecke oder einen Einspritzkolben Material in einen Formhohlraum 32 einer Spritzgießform 34 in einer Werkzeugschließeinheit 33 einspritzt. Die Vorrichtung verfügt über Sensormittel 11,12 wie z.B. einen Werkzeuginnendrucksensor und einen Temperaturfühler im Bereich der Spritzgießeinheit. Über die Sensormittel werden eine Vielzahl von Prozeßparamtern während jedes Prozesses, also während jedes Zyklus ermittelt. Über Mittel 13 zur Aufnahme von Prozeßkurvenverläufen PKV werden die Prozeßparameter während eines Prozesses erfaßt. Darüber hinaus verfügt die Vorrichtung über Eingabemittel 14, die die Eingabe diverser Werte in Speichermittel 16 ermöglichen. Erforderlich ist z.B. die Eingabe der während der Bemusterungsphase durch konventionelle Methoden ermittelten charakteristischen Eigenschaften QM der während dieser Phase hergestellten Produkte. Allerdings können diese Werte teilweise auch selbsttätig ermittelt werden und unmittelbar in die Vorrichtung eingespeist werden. Eingegeben oder z.B. von Datenträgern eingelesen werden müssen aber z.B. auch bestimmte Sollwerte vorgegebener charakteristischer Eigenschaften $QM_{Soll}$, die z.B. für einen Sollwertvektor der charakteristischen Eigenschaften kennzeichnend sind. Ferner umfaßt die Vorrichtung Mittel 15 zur Bestimmung einer Beziehung zwischen den charakteristischen Eigenschaften QM,SQM und den Prozeßkurvenverläufen PKV bzw. Serienprozeßkurvenverläufen SPKV. Hier erfolgt die Zergliederung der Prozeßkurvenverläufe in die Prozeßphasen nach den oben gemachten Vorgaben vorzugsweise numerisch. In den Prozeßphasen werden dann jeweils die Prozeßkennzahlen PKZ bzw. Serienprozeßkennzahlen SPKZ ermittelt, die mit den charakteristischen Eigenschaften durch diese Beziehung korreliert sind. Die in der Testphase ermittelte Beziehung wird in Speichermitteln 16 gespeichert. Die Maschineneinstellgrößen MG sind über Einstellvorrichtungen 17,18 beeinflußbar. Im Ausführungsbeispiel beeinflußt die Einstellvorrichtung 18 durch Verstellung eines Regelventils 36 z.B. den Druck einer die Förderschnecke antreibenden Kolben-Zylindereinheit und damit den Werkzeuginnendruck, der über das Sensormittel 11 erfaßt wird. Die Einstellvorrichtung 17 beeinflußt die Heizbändern 35 zugeführte Stromstärke und damit die Temperatur, die über das Sensormittel 12 erfaßt wird.

In einem Vergleicher 21 wird die während des Prozesses zyklussynchron aufgrund der ermittelten Beziehung berechenbare charakteristische Eigenschaft $SQM_{ber}$ mit der vorgegebenen charakteristischen Eigenschaft $QM_{Soll}$ verglichen und ein Differenzwert ΔQM berechnet, der dem Speichermittel 16 zugeführt wird. Dem Speichermittel 16 sind Mittel 20 zur Bestimmung der für charakteristische Eigenschaften QM maßgebenden Prozeßkennzahlen PKZ zur Bestimmung der maßgebenden Maschineneinstellgrößen MG als Stellgrößen zur Regelung der Qualität angeschlossen, die einem Regler 19 zum Verändern der Einstellvorrichtung in Abhängigkeit von dem ermittelten Differenzwert ΔQM einen Differenzwert ΔMG für die Maschineneinstellgröße MG liefert, so daß während des Spritzzyklus die Qualität des herzustellenden Spritzgießteils regelbar ist.

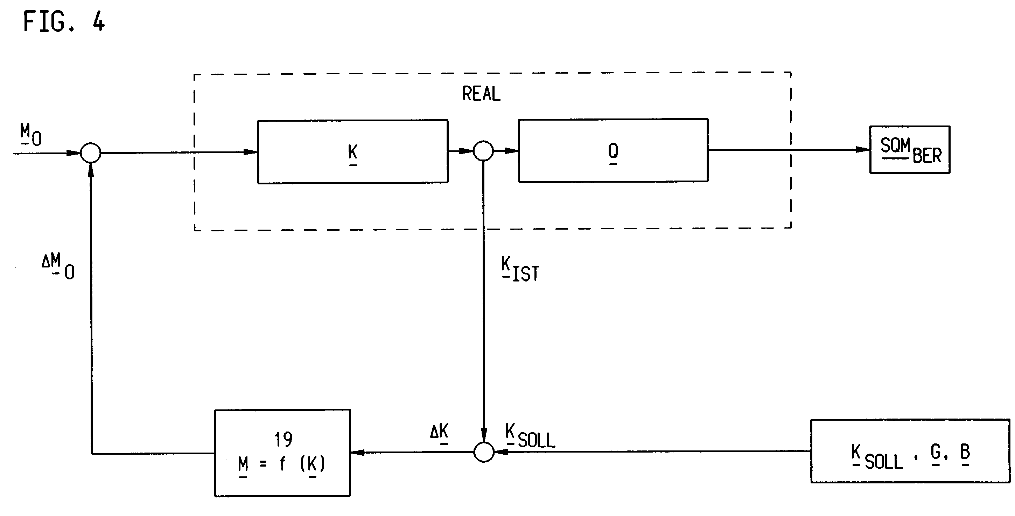

In Fig. 3, 4 ist ein Reglerschaubild dargestellt, daß die Regelung verdeutlicht:

Aus der meist vorgeschalteten Testphase werden zunächst in Fig. 3 für die für die charakteristischen Eigenschaften maßgebenden Maschineneinstellgrößen MG die optimierten Werte ermittelt und als Grundeinstellung $\underline{M}$o eingestellt, bei welchen die charakteristischen Eigenschaften innerhalb der vorgegebenen Toleranzen bleiben.

Aus der Messung und kontinuierlichen on-line Auswertung der analogen und digitalen Prozeßkurvenverläufe ergeben sich die Kennzahlen $\underline{K}$. Anhand der Kennzahlen läßt sich die tatsächliche, am Formteil gemessene Qualität $\underline{Q}$ berechnen zum Vektor aller berechenbaren charakteristischen Eigenschaften $\underline{SQM}_{ber}$ (Formteilqualität). Für den aktuellen Zyklus ergibt sich hieraus ein tatsächlicher Kennzahlenvektor $\underline{K}_{Ist}$.

Die Kennzahlenmodelle $\underline{KMD}$ beschreiben die funktionalen Abhängigkeiten der Maschineneinstellgrößen und der Kennzahlen ( $\overline{K} = f(\overline{M})$ ). Sie ermöglichen den Kennzahlensollvektor $\underline{K}$ und die Änderung der Maschineneinstellung $\underline{M}$o zu ermitteln. Ebenso beschreiben die Qualitätsmodelle $\underline{QMD}$ die funktionale Abhängigkeit der Kennzahlen und der charakteristischen Eigenschaften ( $\overline{Q} = f(\overline{K})$ ). Damit kann aus einem Kennzahlenvektor $\underline{K}_{Ist}$ ein Vektor aller berechenbaren charakteristischen Eigenschaften $\underline{SQM}_{ber}$ ermittelt werden. Die Kennzahlenmodelle und Qualitätsmodelle beschreiben in mathematischer Form die Regelstrecke, so daß eine Regelung oder Steuerung erst möglich wird.

Erstmals vor Beginn der eigentlichen Prozegregelung wird ein Optimierlauf gestartet, der den optimalen Kennzahlvektor $\underline{K}_{Soll/opt}$ bestimmt. Dieser Vektor bleibt solange konstant, solange keine Veränderungen am System z.B. in Form geänderter Qualitätsanforderungen oder Werkzeugänderungen vorgenommen werden. Der Optimierer 40 als Gleichungslöser für die Qualitätsmodelle ist erforderlich, sobald die charakteristischen Eigenschaften nicht mehr linear unabhängig sind und somit keine eindeutige Lösung mehr möglich ist von $\overline{K} = f(\overline{Q})$. Mittels eines Optimierverfahrens muß hier eine Näherungslösung erzielt werden unter vorgegebenen Randbedingungen (Bandbreiten, Zykluszeit usw.). Ist das Gleichungssystem analytisch lösbar, kann $\underline{K}_{Soll/opt}$ unmittelbar berechnet werden. Aber auch aufgrund linearer oder nicht linearer Abhängigkeiten der Kennzahlen untereinander kann eine unmittelbare Einstellung von $\underline{K}_{Soll/opt}$ nicht möglich sein, so daß dann der Optimierer 41 als Gleichungslöser für Kennzahlen eingesetzt werden muß.

Aus der Differenz von Kennzahlvektor $\underline{K}_{Ist}$ und optimalen Kennzahlvektor $\underline{K}_{Soll/opt}$ bestimmt der Regler 19 die notwendige Änderung $\Delta\underline{M}_o$ der Maschineneinstellung, um die Differenz zu minimieren.

Alternativ kann in Fig. 4 ein Kennzahlsollvektor $\underline{K}_{Soll}$ z.B. aufgrund der Testphase festgelegt werden oder es werden vergleichbare Gütekriterien G oder Beschränkungen B festgelegt, so daß der Regler 19 und/oder Optimierer lediglich noch die Differenz zwischen den Kennzahlenvektoren minimiert. Hier wird nicht geprüft, inwieweit die Qualität beeinflußt wird.

Zusammengefaßt ist neuartig:

- Soweit möglich Regelung auf den Zyklus bezogen.
- Die Regelung einer beliebigen Anzahl von charakteristischen Eigenschaften QM.
- Die Regelung beliebiger meßbarer als auch attributiver, charakteristischer Eigenschaften QM.
- Berücksichtigung aller signifikanten Abhängigkeiten der charakteristischen Eigenschaften QM untereinander.
- Berücksichtigung aller maßgebenden Abhängigkeiten der Prozeßgrößen untereinander.
- Die Stellgrößen liegen nicht von vornherein fest, sondern ergeben sich aus der Testphase.
- Regelgröße ist ein Prozeßkennzahlenvektor oder ein berechneter Qualitätsvektor.

## Patentansprüche

1. Verfahren zur automatischen Beeinflussung von Maschineneinstellgrößen (MG) in zyklisch ablaufenden Prozessen, insbesondere in kunststoffverarbeitende Maschinen und Druckgußmaschinen, mit den Schritten:

   a) Einstellung eines Arbeitspunktes, der die Herstellung von Produkten erlaubt,

   b) Testweise Herstellung von in den Prozessen gefertigten Produkten ausgehend von dem Arbeitspunkt unter systematischer Veränderung der Maschineneinstellgrößen (MG) und unter systematischer Variation möglicher Kombinationen der Maschineneinstellgrößen (MG),

   c) Erfassung der charakteristischen Eigenschaften (QM) der in Schritt b) gefertigten Produkte unter Entnahme und Bewertung wenigstens einer Probe je Kombination von Maschineneinstellgrößen (MG) sowie Zuordnung der erfaßten charakteristischen Eigenschaften (QM) zu der jeweiligen Kombination der Maschineneinstellgrößen,

   d) Ermitteln einer Vielzahl von Prozeßparametern zur Erstellung von Prozeßkurvenverläufen und Erfassung und Speicherung dieser Prozeßkurvenverläufe (PKV) während Schritt b) sowie Zuordnung der Prozeßkurvenverläufe zu der jeweiligen Kombination der Maschineneinstellgrößen (MG),

   e) Berechnung mehrerer, sich in Abhängigkeit der jeweiligen Prozeßkurvenverläufe (PKV) ergebenden, variablen Prozeßphasen (PPH) aus den in Schritt d) erfaßten Prozeßkurvenverläufen (PKV) und Bestimmung der für beliebige Prozeßkurvenverläufe charakteristischen Prozeßkennzahlen (PKZ), durch die die Veränderung der charakteristischen Eigenschaften (QM) beschreibbar ist,

   f) Bestimmung der Beziehungen zwischen den in Schritt e) bestimmten Prozeßkennzahlen (PKZ) und den in Schritt c) erfaßten charakteristischen Eigenschaften (QM),

   g) Bestimmung der Beziehungen zwischen den in Schritt e) bestimmten Prozeßkennzahlen (PKZ) und den in Schritt b) vorgenommenen Änderungen der Maschineneinstellgrößen (MG),

   h) Vorgeben mehrerer voneinander abhängiger charakteristischer Eigenschaften (QM$_{Soll}$) für die Serienproduktion,

   i) Ermitteln einer Vielzahl von Prozeßparametern während der Serienproduktion zur Erstellung von Serienprozeßkurvenverläufen (SPKV) und Erfassung und Speicherung dieser Serienprozeßkurvenverläufe sowie Zuordnung der Serienprozeßkurvenverläufe zu der jeweiligen Kombination der Maschineneinstellgrößen (MG),

   j) Berechnung mehrerer sich in Abhängigkeit der jeweiligen Serienprozeßkurvenverläufe (SPKV) ergebenden, variablen Serienprozeßphasen ((SPPH) aus den in Schritt i) erfaßten Serienprozeßkurvenverläufen (SPKV) und Bestimmung der für beliebige Serienprozeßkurvenverläufe charakteristischen Serienprozeßkennzahlen (SPKZ), durch die die Veränderung der charakteristischen Eigenschaften (SQM) während der Serienproduktion beschreibbar ist,

   k) Berechnung der charakteristischen Eigenschaften (SQM$_{ber}$) während der Produktion aufgrund der in Schritt f) ermittelten Beziehungen, mit den in Schritt j) bestimmten Serienprozeßkennzahlen (SPKZ),

   l) Vergleich der in Schritt k) berechneten charakteristischen Eigenschaften (SQM$_{ber}$) mit der vorgegebenen charakteristischen Eigenschaften ($QM_{Soll}$) unter Ermittlung eines Differenzwertes und zur Bestimmung der Prozeßkennzahlen aufgrund der in Schritt f) ermittelten Beziehungen, die zur weitestgehenden Verringerung des Differenzwertes ($\Delta QM$, $\Delta PKZ$) zu verändern sind,

m) Berechnung der zur Verringerung des Differenzwertes ($\Delta QM$, $\Delta PKZ$) als Stellgröße zu verändernden Maschineneinstellgrößen (MG) aufgrund der in Schritt g) ermittelten Beziehungen,

n) Veränderung der Maschineneinstellgrößen (MG) auf die in Schritt m) ermittelten Werte während der Serienproduktion),

o) Wiederholung der Schritte i) bis n) zur weitestgehenden Verringerung des Differenzwertes ($\Delta QM$, $\Delta PKZ$).

2. Verfahren nach Anspruch 1, gekennzeichnet durch das selbsttätige Zergliedern der Prozeßkurvenverläufe (PKV) in Prozeßphasen in Schritt e) durch Bestimmung der Änderung im Signaleingang der Prozeßparameter und/oder im Signaleingang von Digitalsignalen.

3. Verfahren nach Anspruch 1, dadurch gekennzeichnet, daß aufgrund der während der Serienproduktion gemäß Schritt j) ermittelten Serienprozeßkennzahlen (SPKZ) die in Schritt f) und g) bestimmten Beziehungen überprüft und bei Abweichungen korrigiert werden.

4. Verfahren nach Anspruch 1, dadurch gekennzeichnet, daß der Differenzwert der Prozeßkennzahlen (PKZ) oder der Differenzwert der charakteristischen Eigenschaften zur Ermittlung der Stellgröße in Schritt m) herangezogen wird.

5. Verfahren nach Anspruch 1, gekennzeichnet durch die Bestimmung eines optimalen Arbeitspunktes aufgrund der in Schritt f) und in Schritt g) ermittelten Beziehungen vor Beginn der Serienproduktion gemäß Schritt i).

6. Verfahren nach Anspruch 1, gekennzeichnet durch die Überwachung der berechneten charakteristischen Eigenschaften ($SQM_{ber}$) der während der Serienproduktion hergestellten Produkte synchron während des Prozeßzyklus.

7. Verfahren nach Anspruch 1, gekennzeichnet durch das selbsttätige Zergliedern der Serienprozeßkurvenverläufe (SPKV) in Prozeßphasen in Schritt j) durch Bestimmung der Änderung im Signaleingang der Prozeßparameter und/oder im Signaleingang von Digitalsignalen.

8. Vorrichtung zur Beeinflussung von Maschineneinstellgrößen (MG) in zyklisch ablaufenden Prozessen unter Durchführung des Verfahrens nach Anspruch 1 mit

   - Sensormitteln (11,12) zur Erfassung einer Vielzahl von Prozeßparametern eines Prozesses,
   - Mitteln (13) zur Aufnahme von Prozeßkurvenverläufen der Prozeßparameter während einzelner Prozesse,
   - Eingabemitteln (14) zur Eingabe von charakteristischen Eigenschaften (QM) von Produkten, die während der Erfassung der Prozeßparameter erzeugt werden in Speichermitteln (16),
   - Mittel (15) zur Bestimmung von Beziehungen zwischen den charakteristischen Eigenschaften (QM) und Prozeßkurvenverläufen (PKV) durch Zergliederung der Prozeßkurvenverläufe in Prozeß-phasen, in denen Prozeßkennzahlen (PKZ) maßgebend sind, die mit den charakteristischen Eigenschaften (QM) korreliert sind,
   - Speichermitteln (16) zum Speichern dieser Beziehungen,
   - Einstellvorrichtung (17,18) für Maschineneinstellgrößen (MG),
   - Mittel (20) zur Bestimmung der für charakteristische Eigenschaften (QM) maßgebenden Prozeßkennzahlen (PKZ) zur Ermittlung der für die vorher bestimmten charakteristischen Eigenschaften (QM) maßgebenden Maschineneinstellgrößen (MG),
   - einem Vergleicher (21), der die aufgrund der in der Serienproduktion ermittelten Serienprozeßkennzahl (SPKZ) berechenbaren charakteristischen Eigenschaften ($SQM_{ber}$) mit vorgegebenen charakteristischen Eigenschaften ($QM_{Soll}$) zur Ermittlung eines Differenzwertes ($\Delta QM$ oder $\Delta PKZ$) vergleicht,
   - einem Regler (19) zum Verändern der Einstellvorrichtung (17,18) für die maßgebende Maschineneinstellgröße (MG) in Abhängigkeit von dem ermittelten Differenzwert ($\Delta QM$ oder $\Delta PKZ$)).

9. Vorrichtung nach Anspruch 8, gekennzeichnet durch Überwachungsmittel für die charakteristischen Eigenschaften (SQM) der während der Serienproduktion hergestellten Produkte synchron während des Prozesses unter Anwendung der in den Speichermitteln (16) gespeicherten Beziehungen.

**Claims**

1. Method of automatically influencing machine setting values (MG) in cyclically running processes, especially in plastics processing machines and die-casting machines, comprising the steps:

   a) setting an operating point enabling the production of products,
   b) test production of products produced in the processes starting at the operating point and therein systematically changing the machine setting values (MG) and systematically variating possible combinations of the machine setting values (MG),
   c) detecting characteristic features (QM) of the products produced in step b) in discharging and evaluating of at least one specimen per each combination of machine setting values (MG) and referencing of the detected characteristic features (QM) to the resepctive combination of machine setting values,
   d) determing a plurality of process parameters for creation of process curve courses and detecting and storing of these curve courses (PKV) during step b) and referencing of the process curve courses to the respective combination of machine setting values (MG),
   e) calculating a plurality of variable process phases (PPH) resulting in dependency of the respective process curve courses (PKV) from the process curve courses (PKV) detected in step d) and determining process characteristics (PKZ) characteristic for wilful process curve courses, by which process characteristics the changing of the characteristic features (QM) can be described,
   f) determing the relations between the process characteristics (PKZ) determined in step e) and the characteristic features (QM) detected in step c),
   g) determing the relations between the process characteristics (PKZ) and the variations of the machine setting values (MG) made in step b),
   h) presetting a plurality of characteristic features ($QM_{Soll}$) dependent from each other for a series production,
   i) determining a plurality of process parameters during series production for creation of series process curve courses (SPKV) and detecting and storing of these series process curve courses and referencing them to the respective combination of machine setting values (MG),
   j) calculating a plurality of variable series process phases (SPPH) resulting in dependency of the series process curve courses (SPKV) from the series process curve courses detected in step i) and determining series process characteristics (SPKZ) for wilful series process curve courses, by which process characteristics the changing of the series characteristic features (SQM) during series production can be described,
   k) calculating characteristic features ($SQM_{ber}$) during series production and based on the relations determined in step f) in using the series process characteristics (SPKZ) determined in step j),
   l) comparing the characteristic features ($SQM_{ber}$) calculated in step k) with the preset characteristic features ($QM_{Soll}$) for determination of a difference value and process characteristics based on the relations determined in step f), which process characteristics have to be changed to achieve the far-most reduction of the difference value ($\Delta QM$, $\Delta PKZ$),
   m) calculating the machine setting values (MG) to be changed as control value for a reduction of the difference value ($\Delta QM$, $\Delta PKZ$) based on the relations determined in step g),
   n) changing the machine setting values (MG) to the values calculated in step m) during series production,
   o) repeating steps i) to n) for farmost reduction of the difference value ($\Delta QM$, $\Delta PKZ$).

2. Method according to claim 1, characterized by the self-acting dissection of the process curve courses (PKV) into process phases in step e) by determination of the variation in process parameters signal input and/or digital signal input.

3. Method according to claim 1, characterized in that based on the series process characteristics (SPKZ) determined in step j) during series production the relations determined in step f) and g) are examined and corrected in case of deviations.

4. Method according to claim 1, characterized in that the difference value of the process characteristics (PKZ) or the difference value of the characteristic features is used for determination of the control value in step m).

5. Method according to claim 1, characterized by the determination of an optimal operating point based on the relations determined in step f) and in step g) before the start of the series production according to step i).

6. Method according to claim 1, characterized by monitoring the calculated characteristic features ($SQM_{ber}$) of products produced during series production synchronously during the process cycle.

7. Method according to claim 1, characterized by the self-acting dissection of the series process curve courses (SPKV) into process phases in step j) by determination of the variation in process parameters signal input and/or digital signal input.

8. Device for influencing machine setting values (MG) in cyclically running processes in carrying out the method according to claim 1 comprising

- sensing means (11, 12) for detecting a plurality of process parameters of a process,
- means (13) for receiving process curve courses of process parameters during single processes,
- input means (14) for inputting characteristic features (QM) of products produced at the time of detecting the process parameters into storing means (16),
- means (15) for determining relations between the characteristic features (QM) and process curve courses (PKV) by dissection of the process curve courses into process phases, in which process characteristics (PKZ) are decisive, which are correlated with the characteristic features (QM),
- storing means (16) for storing these relations,
- setting device (17, 18) for setting machine setting values (MG),
- means (20) for determining the process characteristics (PKZ) decisive for characteristic features (QM) in order to determine the machine setting values (MG) decisive for the preset characteristic features (QM),
- a comparator (21) comparing the characteristic features ($SQM_{ber}$), calculated on the basis of the series process characteristic (SPKZ) determined in series production, with preset characteristic features ($QM_{Soll}$) for determination of a difference value ($\Delta QM$ or $\Delta PKZ$),
- a controller (19) for varying the setting device (17, 18) for the decisive machine setting value (MG) in dependency of the determined difference value ($\Delta QM$ or $\Delta PKZ$).

9. Device according to claim 8, characterized by monitoring means for monitoring the characteristic features (SQM) of products produced during series production synchronously during the process in using the relations stored in the storing means (16).

**Revendications**

1. Procédé d'action automatique sur des grandeurs de réglage de machines (MG) dans des processus cycliques, en particulier dans des machines de transformation des plastiques et des machines de coulée sous pression, comportant les étapes :

a) réglage d'un point de fonctionnement qui permet la fabrication de produits,
b) fabrication d'essai de produits fabriqués dans les processus, à partir du point de fonctionnement avec changement systématique des grandeurs de réglage de machines (MG) et variation systématique de combinaisons possibles des grandeurs de réglage de machines (MG),
c) saisie des propriétés caractéristiques (QM) des produits fabriqués dans l'étape b) par prélèvement et évaluation d'au moins un échantillon par combinaison de grandeurs de réglage de machines (MG), et affectation des propriétés caractéristiques (QM) saisies à la combinaison des grandeurs de réglage de machines,
d) détermination d'un grand nombre de paramètres de processus pour l'établissement de courbes de processus, saisie et mémorisation de ces courbes de processus (PKV) pendant l'étape b), et affectation des courbes de processus à la combinaison des grandeurs de réglage de machines (MG),
e) calcul de plusieurs phases variables de processus (PPH), obtenues en fonction des courbes de processus (PKV), à partir des courbes de processus (PKV) saisies dans l'étape d), et détermination des indices de processus (PKZ) caractéristiques de courbes quelconques de processus qui permettent de représenter le changement des propriétés caractéristiques (QM),
f) détermination des relations entre les indices de processus (PKZ) déterminés dans l'étape e) et les propriétés caractéristiques (QM) saisies dans l'étape c),
g) détermination des relations entre les indices de processus (PKZ) déterminés dans l'étape e) et les changements des grandeurs de réglage de machines (MG) faits dans l'étape b),
h) fixation de plusieurs propriétés caractéristiques indépendantes les unes des autres ($QM_{Soll}$) pour la production en série,
i) détermination d'un grand nombre de paramètres de processus pendant la production en série pour l'établissement de courbes de processus de série (SPKV), saisie et mémorisation de ces courbes de processus de série, et affectation des courbes de processus de série à la combinaison des grandeurs de réglage de machines (MG),

14

j) calcul de plusieurs phases variables de processus de série (SPPH), obtenues en fonction des courbes de processus de série (SPKV), à partir des courbes de processus de série (SPKV) saisies dans l'étape i), et détermination des indices de processus de série (SPKZ) caractéristiques de courbes quelconques de processus de série qui permettent de représenter le changement des propriétés caractéristiques (SQM) pendant la production en série,

k) calcul des propriétés caractéristiques (SQM$_{ber}$) pendant la production d'après les relations déterminées dans l'étape f), avec les indices de processus de série (SPKZ) déterminés dans l'étape j),

l) comparaison des propriétés caractéristiques (SQM$_{ber}$) calculées dans l'étape k) avec les propriétés caractéristiques fixées (QM$_{Soll}$), avec détermination d'une différence et pour la détermination des indices de processus d'après les relations déterminées dans l'étape f), qu'il s'agit de changer pour réduire le plus possible la différence ($\Delta$QM, $\Delta$PKZ),

m) calcul des grandeurs de réglage de machines (MG) à changer pour réduire la différence ($\Delta$QM, $\Delta$PKZ) comme grandeur de réglage, d'après les relations déterminées dans l'étape g),

n) changement, pendant la production en série, des grandeurs de réglage de machines (MG) en leur donnant les valeurs déterminées dans l'étape m),

o) répétition des étapes i) à n) pour réduire le plus possible la différence ($\Delta$QM, $\Delta$PKZ).

**2.** Procédé selon la revendication 1, caractérisé par la décomposition automatique des courbes de processus (PKV) en phases de processus dans l'étape e) par détermination du changement de l'entrée de signaux des paramètres de processus et/ou de l'entrée de signaux numériques.

**3.** Procédé selon la revendication 1, caractérisé par le fait que d'après les indices de processus de série (SPKZ) déterminés selon l'étape j) pendant la production en série, les relations déterminées dans les étapes f) et g) sont vérifiées et corrigées en cas d'écarts.

**4.** Procédé selon la revendication 1, caractérisé par le fait que la différence des indices de processus (PKZ) ou la différence des propriétés caractéristiques est utilisée pour la détermination de la grandeur de réglage dans l'étape m).

**5.** Procédé selon la revendication 1, caractérisé par la détermination, avant le début de la production en série selon l'étape i), d'un point de fonctionnement optimal d'après les relations déterminées dans l'étape f) et dans l'étape g).

**6.** Procédé selon la revendication 1, caractérisé par le contrôle des propriétés caractéristiques calculées (SQM$_{ber}$) des produits fabriqués pendant la production en série, de manière synchrone pendant le cycle de processus.

**7.** Procédé selon la revendication 1, caractérisé par la décomposition automatique des courbes de processus de série (SPKV) en phases de processus dans l'étape j) par détermination du changement de l'entrée de signaux des paramètres de processus et/ou de l'entrée de signaux numériques.

**8.** Dispositif pour agir sur des grandeurs de réglage de machines (MG) dans des processus cycliques avec mise en oeuvre du procédé de la revendication 1, comportant

- des moyens de détection (11, 12) pour la saisie d'un grand nombre de paramètres d'un processus,
- des moyens (13) pour l'enregistrement de courbes de processus des paramètres de processus pendant des processus individuels,
- des moyens d'entrée (14) pour l'entrée dans des moyens de mémorisation (16) de propriétés caractéristiques (QM) de produits qui sont produits pendant la saisie des paramètres de processus,
- des moyens (15) pour la détermination de relations entre les propriétés caractéristiques (QM) et des courbes de processus (PKV) par décomposition des courbes de processus en phases de processus dans lesquelles des indices de processus qui sont corrélés avec les propriétés caractéristiques (QM) sont déterminants,
- des moyens de mémorisation (16) pour la mémorisation de ces relations,
- un dispositif de réglage (17, 18) pour des grandeurs de réglage de machines,
- des moyens (20) pour la détermination des indices de processus (PKZ) déterminants pour des propriétés caractéristiques (QM), pour la détermination des grandeurs de réglage de machines (MG) déterminantes pour les propriétés caractéristiques (QM) déterminées auparavant,
- un comparateur (21) qui compare les propriétés caractéristiques (SQM$_{ber}$) calculables d'après l'indice de processus de série (SPKZ) déterminé dans la production en série avec des propriétés caractéristiques fixées (QM$_{Soll}$), pour la détermination d'une différence ($\Delta$QM ou $\Delta$PKZ).

- un régulateur (19) pour le changement du dispositif de réglage (17, 18) pour la grandeur déterminante de réglage de machine (MG) en fonction de la différence déterminée ($\Delta$QM ou $\Delta$PKZ).

9. Dispositif selon la revendication 8, caractérisé par des moyens de contrôle des propriétés caractéristiques (SQM) des produits fabriqués pendant la production en série, de manière synchrone pendant le processus avec utilisation des relations mémorisées dans les moyens de mémorisation (16).

FIG. 1

EP 0 784 535 B1

FIG. 2

# FIG. 3

EP 0 784 535 B1

FIG. 4

FIG. 5

FIG. 6